# EUROPÄISCHE PATENTSCHRIFT

(11) **EP 0 863 318 B1**
(45) Veröffentlichungstag und Bekanntmachung des Hinweises auf die Patenterteilung: **04.10.2001**
(21) Anmeldenummer: 98810031.9
(22) Anmeldetag: 22.01.1998
(51) Int. Cl.: F16B 13/06

(54) **Spreizanker**
Anchoring bolt
Boulon d'ancrage

(30) Priorität: 08.03.1997 DE 19709567
(43) Veröffentlichungstag der Anmeldung: 09.09.1998
(73) Patentinhaber: HILTI Aktiengesellschaft, 9494 Schaan (LI)
(72) Erfinder: Raber, Stefan, Dr.-Ing., 86916 Kaufering (DE)
(74) Vertreter: Wildi, Roland

(56) Entgegenhaltungen:
- EP-A- 0 195 188
- CH-A- 661 569
- DE-A- 3 031 048
- US-A- 4 474 516
- US-A- 4 968 200

## Beschreibung

Die Erfindung betrifft einen Spreizanker, der eine Ankerstange mit einem sich in Einsteckrichtung erweiternden Kopfteil und eine Hülse mit durch axiale Schlitze voneinander getrennten Speizlappen umfasst, die sich von einem plastischen Gelenk zum freien Vorderende der Hülse erstrecken und durch Relativverschiebung der Hülse und der Ankerstange radial ausstellbar sind.

Spreizanker der gattungsgemässen Art werden in vorbereitete Bohrungen im Untergrund eingesetzt und durch radiales Ausstellen der Spreizlappen verankert. Die Befestigung des Spreizankers im Untergrund erfolgt dabei durch die Spreizkraft, die die Spreizlappen auf die Bohrlochwandung ausüben. Bei sogenannten Hinterschnittsystemen erfolgt die Verankerung durch einen Formschluss, den die radial ausgestellten Spreizlappen in einer Hinterschneidung der Bohrung bilden. Bei den Hinterschnittsystemen unterscheidet man konventionelle Systeme, bei denen nach dem Erstellen der Bohrung in einem separaten Arbeitsgang mit einem speziellen Werkzeug eine Hinterschneidung hergestellt wird, und selbstschneidende Systeme, bei denen durch das radiale Ausstellen der Spreizlappen die Bohrlochwandung mit einer Hinterschneidung versehen wird. Bei den selbstschneidenden Systemen sind zu diesem Zweck die Spreizlappen mit Schneiden ausgestattet, die fräsend oder meisselnd den Untergrund abtragen.

Bei den bekannten Systemen weisen die Spreizlappen im wesentlichen zylindrische Aussenflächen auf. Diese Ausgangsgeometrien der Spreizlappen sind nur unzureichend auf die Geometrie der Hinterschneidung abgestimmt, die üblicherweise kegelflächenförmig ist. Die Anlageflächen der Spreizlappen und der Hinterschneidung weisen in Umfangsrichtung und in Längsrichtung der Spreizlappen voneinander abweichende Krümmungen auf. Dadurch wird bei Belastung der Untergrund ungleichmässig beansprucht. Bei Lasteinleitung können bereichsweise sehr hohe Flächenpressungen auftreten, die zu einer Zerstörung des Untergrunds und zu einer Herabsetzung der Lastwerte führen können. Auch die Geometrien der Rückfläche der Spreizlappen und der Mantelfläche des Kopfteils stimmen bei den bekannten Systemen oftmals nur unzureichend überein. So weist das Kopfteil vielfach eine kegelige oder trompetenförmige Mantelfläche auf, während die Spreizlappen durch Längsschlitze in einer zylindrischen Hülse hergestellt sind und zylindrische Geometrien aufweisen. Es ist unmittelbar einsichtig, dass bei diesen Gegebenheiten die Krümmungsradien der Anlageflächen voneinander abweichen. Die aufgrund der unterschiedlichen Krümmungsradien auftretenden Linienkontakte können zu Kaltverschweissungen führen, die ein Nachspreizen in gerissenem Untergrund in einer sich öffnenden Bohrung verhindern können.

Aufgabe der vorliegenden Erfindung ist es, den geschilderten Nachteilen der bekannten Spreizanker, insbesondere Hinterschnittsysteme, abzuhelfen. Bei Belastung des Spreizankers soll die Last schonend in den Untergrund eingeleitet werden, um lokale Zerstörungen zu verhindern. Kaltverschweissungen zwischen den Spreizlappen und dem Kopfteil der Ankerstange sollen verhindert werden. Die Steifigkeit des Systems Spreizanker-Untergrund soll verbessert werden.

Diese Aufgaben werden erfindungsgemäss durch einen Spreizanker gelöst, der die im kennzeichnenden Abschnitt des Patentanspruchs 1 angeführten Merkmale aufweist. Insbesondere wird durch die Erfindung ein Speizanker geschaffen, der eine Ankerstange mit einem sich in Einsteckrichtung erweiternden Kopfteil und eine Hülse mit durch axiale Schlitze voneinander getrennten Speizlappen umfasst, die sich von einem plastischen Gelenk zum freien Vorderende der Hülse erstrecken und durch Relativverschiebung der Hülse und der Ankerstange radial ausstellbar sind. Die Spreizlappen weisen jeweils wenigstens eine nutenartige Vertiefung auf, die im Bereich des freien Vorderendes der Hülse mündet und sich wenigstens über einen Teil der axialen Länge der Spreizlappen erstreckt. Die nutenartige Vertiefung ist gegenüber einer zur Achse der Hülse parallelen Geraden geneigt und weist an ihrer Mündung im Bereich des freien Vorderendes der Hülse den grössten Abstand von der Geraden auf.

Durch die erfindungsgemässe Massnahme kann sich der Krümmungsradius der Anlageflächen der Spreizlappen während dem Verspreizen ändern. Die nutenartigen Vertiefungen wirken als axiale plastische Gelenke und ermöglichen eine kontinuierliche Anpassung der Spreizlappen an die Geometrie des Kopfteils und der Hinterschneidung. Die nutenartigen Vertiefungen sind in den Bereichen der grössten Verformung angeordnet. Indem sie sich ausgehend von den freien Vorderenden wenigstens über einen Teil der Längserstreckung der Spreizlappen erstrecken, können sich die Spreizlappen an die durchmessergrössten Bereiche des Kopfteils der Ankerstange angleichen. Dadurch liegen die ausgestellten Spreizlappen weitgehend vollflächig an der Mantelfläche des Kopfteils und an der Bohrlochwandung in der Hinterschneidung. Dies gewährleistet eine möglichst schonende Lasteinleitung in den Untergrund und verhindert übermässig hohe Flächenpressungen zwischen den Anlageflächen der Spreizlappen und dem Kopfteil, die zu Kaltverschweissungen führen und eine Relatiwerschiebung zwischen der Hülse und dem Kopfteil verhindern können. Durch die verbesserte Übereinstimmung der Geometrien der Anlageflächen zwischen den Spreizlappen und dem Untergrund bzw. dem Kopfteil wird die Steifigkeit des Gesamtsystems verbessert.

Um eine möglichst vollständige Anpassung der Krümmungsradien der Spreizlappen über die Längserstreckung der Spreizlappen zu gewährleisten, ist es von Vorteil, wenn sich die nutenartige Vertiefung über die gesamte Länge der Spreizlappen erstreckt und am freien Vorderende der Hülse mündet.

Indem jeder Spreizlappen zwei oder mehrere nutenartige Vertiefungen aufweist, die über die Länge der Spreizlappen geradlinig verlaufen und einen grössten Winkel von grösser 0° bis etwa 60°, vorzugsweise etwa 10° bis etwa 50°, miteinander einschliessen, kann die Anpassung der Geometrien noch weiter verbessert werden. Dies ist insbesondere bei Kopfteilen von Vorteil, die eine Mantelfläche aufweisen, deren mittlerer Öffnungwinkel etwa 25° bis etwa 90° beträgt. Die von den nutenartigen Vertiefungen eingeschlossenen grössten Winkel orientieren sich an den Öffnungswinkeln der Mantelfläche des Kopfteils. Bei grösseren Öffnungswinkeln der Mantelfläche sind die von den Vertiefungen eingeschlossenen Winkel gross. Bei kleineren Öffnungswinkeln der Mantelfläche schliessen die nutenartigen Vertiefungen geringere Winkel ein. So schliessen die nutenartigen Vertiefungen für Öffnungswinkel von etwa 30° Winkel im Bereich von etwa 9° bis etwa 19°, vorzugsweise etwa 14°, ein. Bei einem Öffnungswinkel von 40° bewähren sich Winkel von etwa 14° bis etwa 24°, vorzugsweise etwa 19°. Einem Öffnungswinkel der Mantelfläche des Kopfteils von etwa 60° entsprechen Winkel zwischen den nutenartigen Vertiefungen von etwa 22° bis etwa 32°, vorzugsweise 27°. Bei sehr grossen Öffnungswinkeln von etwa 80° erweisen sich Winkel von etwa 30° bis etwa 40°, vorzugsweise etwa 35° von Vorteil.

Die nutenartigen Vertiefungen können über ihre Länge eine unterschiedliche Breite aufweisen. Die Krümmung der Anlageflächen der Spreizlappen und der Mantelfläche des Kopfteils weicht im Bereich des plastischen Gelenks weniger voneinander ab als im Bereich der Mündung der nutenartigen Vertiefungen. Für die Anpassung der Krümmung reicht am plastischen Gelenk daher auch eine geringere Breite der nutenartigen Vertiefungen aus als an ihrer Mündung. Vorzugsweise stehen die Breiten an der Mündung der nutenartigen Vertiefungen und am plastischen Gelenk daher im Verhältnis von etwa 1:1 bis etwa 10:1.

Dadurch, dass die Abweichungen der Geometrien, insbesondere der Krümmungsradien der Anlageflächen, der Spreizlappen und der Mantelfläche des Kopfteils am plastischen Gelenk und an der Mündung der nutenartigenartigen Vertiefungen verschieden sind, sind über die Länge der Spreizlappen unterschiedlich grosse Verformungsarbeiten erforderlich. Für eine Optimierung dieser Verformungsarbeiten ist es von Vorteil, wenn die restliche Materialdicke der Spreizlappen am Grund der nutenartigen Vertiefungen verschieden gross ist. Im Bereich des plastischen Gelenks ist eine geringere Verformungsarbeit erforderlich als an der Mündung der nutenartigen Vertiefungen, biespielsweise am freien Ende der Spreizlappen. Daher kann die Materialdicke der Spreizlappen am plastischen Gelenk grösser sein als am freien Vorderende. Vorzugsweise beträgt das Verhältnis der Materialdicke an der Mündung der nutenartigen Vertiefung zur Materialdicke am plastischen Gelenk etwa 1:1 bis etwa 1:10.

Die als axiale Gelenke wirkenden nutenartigen Vertiefungen können im Prinzip an der der Bohrlochwandung zugewandten Aussenseite der Spreizlappen oder an der Anlagefläche zum Kopfteil vorgesehen sein. Indem bei mehreren nutenartigen Vertiefungen wenigstens eine an der Aussenseite der Spreizlappen angeordnet ist, werden die unterschiedlichen Materialbelastungen der beiden Anordnungen - innen Zug, aussen Druck - bei der Anpassung der Geometrien besser über die Fläche der Spreizlappen verteilt. Es versteht sich, dass insbesondere bei spanender Herstellung der Fertigungsprozess vereinfacht werden kann, wenn die nutenartigen Vertiefungen in den Spreizlappen an der Aussenseite angebracht sind.

Eine vorteilhafte Herstellungsvariante des erfindungsgemässen Spreizankers besteht darin, dass die nutenartigen Vertiefungen durch spanlose Fertigung, beispielsweise Prägen oder Walzen, in der Innen- bzw. der Aussenfläche der Spreizlappen erstellt sind. Diese Fertigungsart eignet sich insbesondere bei Hülsen, die als Blech-Stanz-Biegeteil ausgebildet sind.

Nicht alle Spreizlappen müssen die gleiche Anzahl und Ausbildung von nutenartigen Vertiefungen aufweisen. Beispielsweise kann die Anzahl von nutenartigen Vertiefungen bei aufeinanderfolgenden Spreizlappen verschieden sein oder es kann auch die Breite bzw. die Tiefe der nutenartigen Vertiefungen bei aufeinanderfolgenden Spreizlappen variieren. Auf diese Weise kann die geometrische Anpassung der Anlageflächen weiter optimiert werden.

Die Länge der nutenartigen Vertiefungen erstreckt sich wenigstens über einen Teil der Länge der Spreizlappen. Dabei ist es für die Erzielung hoher Auszugswerte von Vorteil, wenn die Spreizlappen eine Länge aufweisen, die gleich oder grösser ist als die Länge des Kopfteils.

Im folgenden wird die Erfindung anhand eines Ausführungsbeispiels, unter Bezugnahme auf die schematischen Darstellungen, näher erläutert. Es zeigen:
- Fig. 1: einen erfindungsgemässen Spreizanker;
- Fig. 2: einen erfindungsgemäss ausgebildeten Spreizlappen;
- Fig. 3: eine Ansicht der unverspreizten Hülse des Spreizankers ohne Ankerstange gemäss Pfeil P in Fig. 1; und
- Fig. 4: eine Ansicht des Spreizankers gemäss Fig. 3 mit Ankerstange bei radial ausgestellten Spreizlappen.

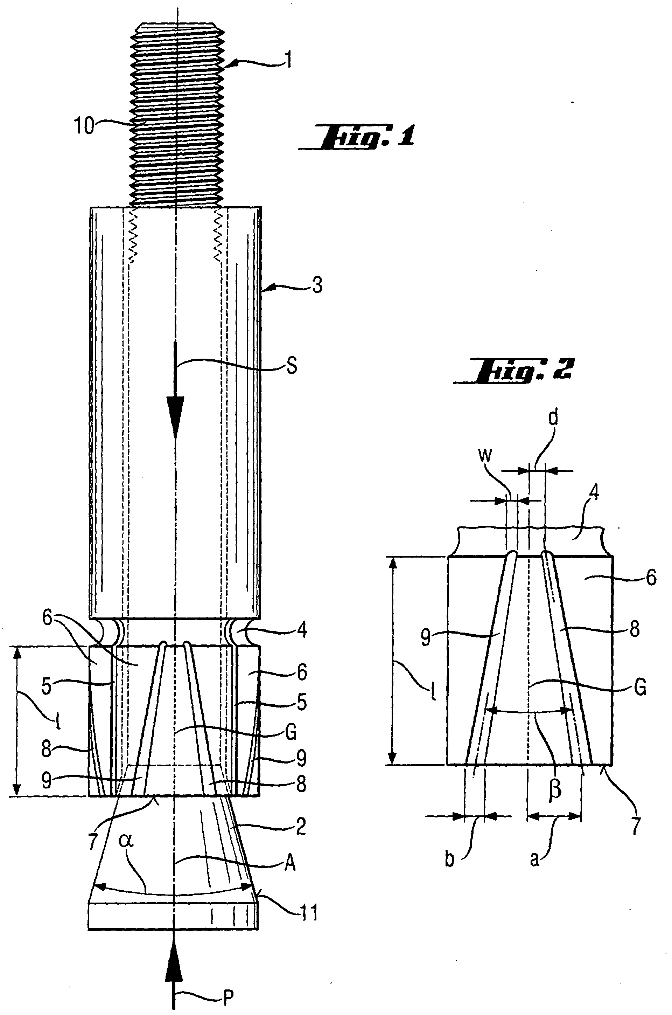

Der in Fig. 1 beispielsweise dargestellte Spreizanker umfasst eine Ankerstange 1 mit einem sich in Einsteckrichtung S erweiternden Kopfteil 2. Das Kopfteil 2 kann sich, wie dargestellt, im wesentlichen konisch erweitern. Es kann auch eine Mantelfläche 11 aufweisen, die sich in Einsteckrichtung S trompentenförmig erweitert. An ihrem gegenüberliegenden Ende ist die Ankerstange 1 mit einem Lastangriffsmittel 10, beispielsweise einem Aussengewinde, ausgestattet. Eine zylindrische Hülse 3 sitzt axial verschieblich auf der Ankerstange 1. An ihrem dem Kopfteil 2 zugewandten Endbereich weist die Hülse 3 durch axiale Schlitze 5 voneinander getrennte Spreizlappen 6 auf, die sich von einem plastischen Gelenk 4 zum freien Vorderende 7 der Hülse 3 erstrecken. Das plastische Gelenk 4 ist von einer senkrecht zur Achse A des Spreizankers angeordneten umlaufenden Ringnut in der Mantelfläche der Hülse 3 gebildet. Indem die Hülse 3 in Einsteckrichtung S auf das Kopfteil 2 der Ankerstange 1 aufgeschoben wird, sind die Spreizlappen 6 radial ausstellbar. Die Spreizlappen 6 weisen eine axiale Länge l auf, die gleich der axialen Länge des Kopfteils 2 ist bzw. diese überschreitet.

Wie aus Fig. 1 und im Detail aus Fig. 2 ersichtlich, ist jeder Spreizlappen 6 mit nutenartigen Vertiefungen 8 bzw. 9 ausgestattet, die sich vom freien Vorderende 7 der Spreizlappen 6 zum plastischen Gelenk 4 erstrecken. Gemäss Fig. 1 und 2 sind die nutenartigen Vertiefungen 8, 9 über die gesamte Länge 1 der Spreizlappen 6 vorgesehen und münden sie am freien Vorderende 7 jedes Spreizlappens 6; sie können aber auch in den Längsseiten der Spreizlappen 6 enden. Die nutenartigen Vertiefungen 8, 9 verlaufen bevorzugt geradlinig und sind gegenüber einer im unverspreizten Zustand parallel zur Achse A des Spreizdübels verlaufenden Geraden G geneigt. Dabei weisen sie am plastischen Gelenk 4 einen kleineren Abstand d von der Geraden G auf als an ihrer Mündung a im Bereich des freien Vorderendes 7. Die nutenartigen Vertiefungen 8, 9 können, wie dargestellt, in der Aussenseite der Spreizlappen 6 vorgesehen sein. In einer Variante der Erfindung können die nutenartigen Vertiefungen 6 auch an der der Mantelfläche 11 des Kopfteils 2 zugewandten Innenseite der Spreizlappen 6 oder an der Innen- und an der Aussenseite der Spzeizlappen 6 angebracht sein. Die Herstellung der nutenartigen Vertiefungen 8, 9 kann spanend oder auch nicht-spanend, beispielsweise durch Prägen oder Walzen, erfolgen. Die nicht-spanende Herstellung bietet sich insbesondere bei Spreizankern an, deren Hülse aus einem Blech-Stanz-Biegeteil besteht.

Der Winkel β (Fig. 2), den die nutenartigen Vertiefungen 8, 9 miteinander einschliessen, ist abhängig vom mittleren Öffungswinkel α (Fig. 1) der Mantelfläche 11 des Kopfteils 2. Kleinen Öffnungswinkeln α der Mantelfläche 11 sind jeweils kleine Einschlusswinkel β der nutenartigen Vertiefungen 8, 9 zugeordnet. Bei grösseren Öffnungswinkeln α der Mantelfläche 11 sind die von den nutenartigen Vertiefungen 8, 9 eingeschlossenen Winkel β gross. So schliessen die nutenartigen Vertiefungen 11 für Öffnungswinkel α von etwa 30° Winkel β im Bereich von etwa 9° bis etwa 19°, vorzugsweise etwa 14°, ein. Bei einem Öffnungswinkel α von 40° bewähren sich Winkel β von etwa 14° bis etwa 24°, vorzugsweise etwa 19°. Einem Öffnungswinkel α der Mantelfläche 11 des Kopfteils 2 von etwa 60° entsprechen Winkel β zwischen den nutenartigen Vertiefungen 8, 9 von etwa 22° bis etwa 32°, vorzugsweise 27°. Bei sehr grossen Öffnungswinkeln α von etwa 80° erweisen sich Winkel β von etwa 30° bis etwa 40°, vorzugsweise etwa 35°, von Vorteil.

Für den Fall, dass ein Spreizlappen 6 nur eine nutenartige Vertiefung 8 bzw. 9 aufweist, sind die angeführten Winkel β zu halbieren. Sie beziehen sich dann auf den Neigungswinkel gegenüber der parallel zur Achse A des Spreizankers verlaufenden Geraden G.

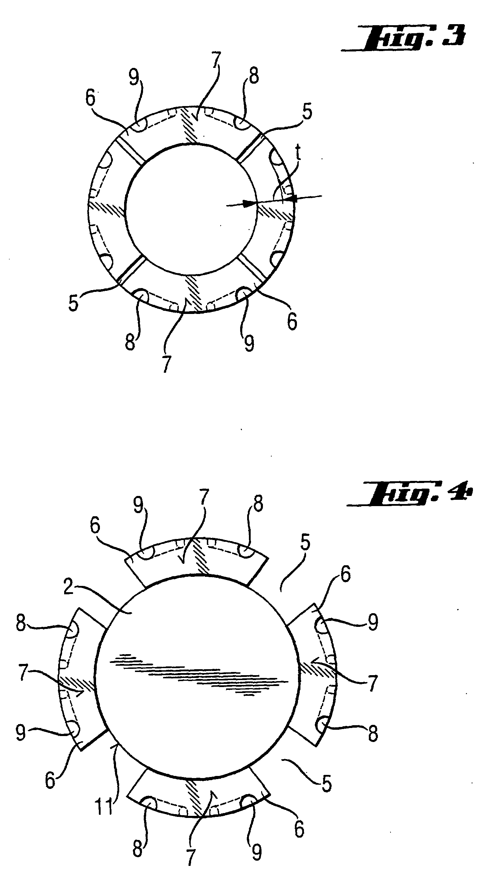

Fig. 3 und 4 zeigen zwei ähnliche Ansichten des Spreizankers aus der Sicht gemäss Pfeil P in Fig. 1. Aus Gründen der besseren Übersicht ist in Fig. 3 die Ankerstange weggelassen. Der Blick auf das in Einsteckrichtung freie Vorderende 7 der Hülse 3 zeigt die durch axiale Schlitze 5 voneinander getrennten Spreizlappen 6 der Hülse 3. Die Spreizlappen 6 sind mit nutenartigen Vertiefungen 8, 9 ausgestattet, die jeweils am freien Vorderende 7 münden. Am Grund der nutenartigen Vertiefungen 8, 9 besitzen die Spreizlappen 6 eine restliche Materialdicke t, die über die axiale Erstreckung der nutenartigen Vertiefungen 8, 9 verschieden sein kann. Die restliche Materialdicke t ist dabei an der Mündung der nutenartigen Vertiefungen 8, 9 am freien Vorderende gleich oder kleiner als am plastischen Gelenk 4.

Fig. 4 zeigt eine Ansicht auf das freie Vorderende 7 der Hülse 3 gemäss Fig. 3 mit auf das Kopfteil 2 aufgeschobenen und radial ausgestellten Spreizlappen 6. Die nutenartigen Vertiefungen 8, 9 in der Aussenfläche der Spreizlappen 6 wirken wie axiale plastische Gelenke und ermöglichen eine flächige Anlage der Spreizlappen 6. Durch die als axiale plastische Gelenke wirkenden nutenartigen Vertiefungen können sich die Spreizlappen an die Krümmung der Mantelfläche 11 des Kopfteils 2 angleichen.

Die erfindungsgemässe Ausbildung der Spreizlappen erweist sich insbesondere bei Hinterschittsystemen von Vorteil. Durch die Möglichkeit, die Krümmung der Spreizlappen auch in Umfangsrichtung an die Krümmung der Mantelfläche des sich in Einsteckrichtung erweiternden Kopfteils anzupassen, wird eine flächige Anlage der Spreizlappen erzielt. Dadurch wird die Steifigkeit des Dübelsystems erhöht, was vor allem bei selbstschneidenden Hinterschnittsystemen von Vorteil ist. Durch die als axiale plastische Gelenke wirkenden nutenartigen Vertiefungen wird die Anlage der Spreizlappen am Untergrund verbessert und die Last kann schonender in den Untergrund eingeleitet werden.

## Patentansprüche

1. Spreizanker umfassend eine Ankerstange (1) mit einem sich in Einsteckrichtung (S) erweiternden Kopfteil (2) und eine Hülse (3) mit durch axiale Schlitze (5) voneinander getrennten Speizlappen (6), die sich von einem plastischen Gelenk (4) zum freien Vorderende (7) der Hülse (3) erstrecken und durch Relativverschiebung der Hülse (3) und der Ankerstange (1) radial ausstellbar sind, **dadurch gekennzeichnet, dass** die Spreizlappen (6) jeweils wenigstens eine nutenartige Vertiefung (8 bzw. 9) aufweisen, die im Bereich des freien Vorderendes (7) mündet und sich wenigstens über einen Teil der axialen Länge (I) der Spreizlappen (6) erstreckt, wobei sie gegenüber einer zur Achse (A) der Hülse parallelen Geraden (G) geneigt verläuft und an ihrer Mündung im Bereich des freien Vorderendes (7) der Hülse (3) den grössten Abstand (a) von der Geraden (G) aufweist.

2. Spreizanker nach Anspruch 1, **dadurch gekennzeichnet, dass** sich die nutenartige Vertiefung (8, 9) über die gesamte Länge (I) der Spreizlappen (6) erstreckt und am freien Vorderende (7) der Hülse (3) mündet.

3. Spreizanker nach Anspruch 1 oder 2, **dadurch gekennzeichnet, dass** jeder Spreizlappen (6) zwei oder mehrere nutenartige Vertiefungen (8, 9) aufweist, die über die Länge (I) der Spreizlappen (6) geradlinig verlaufen und einen grössten Winkel (β) miteinander einschliessen, der grösser ist als 0° und bis etwa 60°, vorzugsweise etwa 10° bis etwa 50°, wobei das Kopfteil (2) eine Mantelfläche (11) aufweist, deren mittlerer Öffnungswinkel (α) etwa 25° bis etwa 90° beträgt und kleineren Öffnungswinkeln (α) der Mantelfläche (11) geringere Winkel (β) zwischen den nutenartigen Vertiefungen (8, 9) zugeordnet sind.

4. Spreizanker nach einem der vorangehenden Ansprüche, **dadurch gekennzeichnet, dass** die nutenartigen Vertiefungen (8, 9) an ihrer Mündung und am plastischen Gelenk (4) jeweils Breiten (b bzw. w) aufweisen, die im Verhältnis von etwa 1:1 bis etwa 10:1 stehen.

5. Spreizanker nach einem der vorangehenden Ansprüche, **dadurch gekennzeichnet, dass** die Spreizlappen (6) am Grund der nutenartigen Vertiefungen (8, 9) eine restliche Materialdicke (t) aufweisen, wobei das Verhältnis der Materialdicke an der Mündung der nutenartigen Vertiefung zur Materialdicke am plastischen Gelenk (4) etwa 1:1 bis etwa 1:10 beträgt.

6. Spreizanker nach einem der vorangehenden Ansprüche, **dadurch gekennzeichnet, dass** wenigstens eine der nutenartigen Vertiefungen (8, 9) an der Aussenseite der Spreizlappen (6) angeordnet ist.

7. Spreizanker nach einem der vorangehenden Ansprüche, **dadurch gekennzeichnet, dass** die nutenartigen Vertiefungen (8, 9) durch spanlose Fertigung, beispielsweise Prägen oder Walzen, der Innen- bzw. der Aussenfläche der Spreizlappen (6) erstellt sind.

8. Spreizanker nach einem der vorangehenden Ansprüche, **dadurch gekennzeichnet, dass** die Anzahl von nutenartigen Vertiefungen (8, 9) bei aufeinanderfolgenden Spreizlappen (6) verschieden ist.

9. Spreizanker nach einem der vorangehenden Ansprüche, **dadurch gekennzeichnet, dass** die axiale Länge (I) der Spreizlappen (6) gleich oder grösser ist als die Länge des Kopfteils (3).

## Claims

1. Expansion anchor comprising an anchor rod (1) with a head (2) widening in the insertion direction (S) and a sleeve (3) with expansion lobes (6) which are parted from each other by axial slits (5), extend from a plastic joint (4) to the tip (7) of the sleeve (3), and can be deployed radially through relative displacement of the sleeve (3) and anchor rod (1), **characterized in that** the expansion lobes (6) each have at least one groove-like indentation (8, 9) terminating in the region of the tip (7) and extending over at least part of the axial length (I) of the expansion lobe (6), said indentation (8, 9) being inclined with respect to a straight line (G) parallel with the axis (A) of the sleeve such that its distance (a) from the straight line (G) is greatest at its termination in the region of the tip (7) of the sleeve (3).

2. Expansion anchor according to Claim 1, **characterized in that** the groove-like indentation (8, 9) extends over the whole length (I) of the expansion lobe (6) and terminates at the tip (7) of the sleeve (3).

3. Expansion anchor according to Claim 1 or Claim 2, **characterized in that** each expansion lobe (6) has two or more groove-like indentations (8, 9) which extend in straight lines over the length (I) of the expansion lobe (6) and include a largest angle (β) which is greater than 0° and up to approximately 60°, preferably approximately 10° to approximately 50°, the head (2) having a lateral surface (11) with a mean cone angle (α) of approximately 25° to approximately 90°, smaller angles (β) between the groove-like indentations (8, 9) being assigned to smaller cone angles (α) of the lateral surface (11).

4. Expansion anchor according to any one of the preceding claims, **characterized in that** the ratio between the widths (b and w respectively) of the groove-like indentations (8, 9) at their termination and at the plastic joint (4) is approximately 1:1 to approximately 10:1.

5. Expansion anchor according to any one of the preceding claims, **characterized in that** the expansion lobes (6) have a residual thickness (t) of material at the root of the groove-like indentations (8, 9), the ratio between the thickness of material at the termination of the groove-like indentations and the thickness of material at the plastic joint (4) being approximately 1:1 to approximately 1:10.

6. Expansion anchor according to any one of the preceding claims, **characterized in that** at least one of the groove-like indentations (8, 9) is located on the outside of the expansion lobe (6).

7. Expansion anchor according to any one of the preceding claims, **characterized in that** the groove-like indentations (8, 9) are made by non-cutting shaping of the inner and/or outer surface of the expansion lobes (6), for example by stamping or rolling.

8. Expansion anchor according to any one of the preceding claims, **characterized in that** the number of groove-like indentations (8, 9) on successive expansion lobes (6) is different.

9. Expansion anchor according to any one of the preceding claims, **characterized in that** the axial length (I) of the expansion lobes (6) is equal to or greater than the length of the head (3).

## Revendications

1. Boulon d'ancrage à expansion comprenant une tige d'ancrage (1) avec une partie de tête (2) s'élargissant dans le sens d'enfoncement (S), ainsi qu'une douille (3) avec des pattes d'écartement (6), séparées l'une de l'autre par des fentes axiales (5), qui s'étendent depuis une articulation plastique (4) vers l'extrémité avant libre (7) de la douille (3) et qui peuvent se déployer radialement, par coulissement relatif de la douille (3) et de la tige d'ancrage (1), **caractérisé en ce que** les pattes d'écartement (6) présentent chacune au moins un renfoncement (8, respectivement 9) du type rainure, qui débouche dans la zone de l'extrémité avant libre (7) et qui s'étend au moins sur une partie de la longueur axiale (1) des pattes d'écartement (6), tandis qu'il s'étend incliné par rapport à une droite (G) parallèle à l'axe (A) de la douille et qu'il présente la distance la plus grande (a) par rapport à la droite (G), à son embouchure, dans la zone de l'extrémité avant libre (7) de la douille (3).

2. Boulon d'ancrage à expansion selon la revendication 1, **caractérisé en ce que** le renfoncement (8, 9) de type rainure s'étend sur toute la longueur (1) des pattes d'écartement (6) et débouche à l'extrémité avant libre (7) de la douille (3).

3. Boulon d'ancrage à expansion selon la revendication 1 ou 2, **caractérisé en ce que** chaque patte d'écartement (6) présente deux renfoncements (8, 9) ou plus de type rainure, qui s'étendent en ligne droite sur la longueur (1) des pattes d'écartement (6) et qui forment entre eux un angle le plus grand (β), qui est supérieur à 0° et qui peut aller jusqu'à environ 60°, de préférence d'environ 10° à environ 50°, la partie de tête (2) présentant une surface d'enveloppe (11) dont l'angle d'ouverture moyen (α) est d'environ 25° à environ 90°, et à de plus petits angles d'ouverture (α) de la surface d'enveloppe (11) étant associés des angles (β) plus faibles entre les renfoncements (8, 9) de type rainure.

4. Boulon d'ancrage à expansion selon une des revendications précédentes, **caractérisé en ce que** les renfoncements (8, 9) de type rainure présentent, à leur embouchure et au droit de l'articulation plastique (4), des largeurs (b, respectivement w) qui sont dans un rapport d'environ 1 : 1 jusqu'à environ 10 : 1.

5. Boulon d'ancrage à expansion selon l'une des revendications précédentes, **caractérisé en ce que** les pattes d'écartement (6) présentent, dans le fond des renfoncements (8, 9) du type rainure, une épaisseur de matière résiduelle (t), le rapport de l'épaisseur de matière, au droit de l'embouchure du renfoncement du type rainure, à l'épaisseur de matière au droit de l'articulation plastique (4) étant d'environ 1 : 1 jusqu'à environ 1 : 10.

6. Boulon d'ancrage à expansion selon l'une des revendications précédentes, **caractérisé en ce qu'**au moins l'un des renfoncements (8, 9) du type rainure est disposé sur le côté extérieur des pattes d'écartement (6).

7. Boulon d'ancrage à expansion selon l'une des revendications précédentes, **caractérisé en ce que** les renfoncements (8, 9) du type rainure sont réalisés par formage sans enlèvement de copeaux, par exemple par estampage ou laminage de la surface intérieure ou de la surface extérieure des pattes d'écartement (6).

8. Boulon d'ancrage à expansion selon l'une des revendications précédentes, **caractérisé en ce que** le nombre de renfoncements (8, 9) du type rainure est différent dans les pattes d'écartement (6) successives.

9. Boulon d'ancrage à expansion selon l'une des revendications précédentes, **caractérisé en ce que** la longueur axiale (s) des pattes d'écartement (6) est égale ou supérieure à la longueur de la partie de tête (3).
